# EUROPEAN PATENT APPLICATION

(11) **EP 4 736 966 A1**
(43) Date of publication of application: **06.05.2026**
(21) Application number: 24210057.6
(22) Date of filing: 31.10.2024
(51) Int. Cl.: A63B 55/60, B62B 5/00

(54) **GOLF TROLLEY**

(71) Applicant: Botronics, 6210 Rèves (BE)
(72) Inventor: PIRAUX, Eric, 6210 Rèves (BE); VAN MALLEGHEM, Antoine, 1420 Braine-L'Alleud (BE)
(74) Representative: Calysta NV

(57) **Abstract**

Golf trolley comprising wheels (40), a drive unit (10) configured to drive the wheels (40) to move the golf trolley, a camera (21), a control unit (30) configured to autonomously control the golf trolley to perform actions, wherein the control unit (30) comprises an object detector (33) and an action trigger unit (32), wherein the action trigger unit (32) is configured to determine an action trigger determined based on a golf club detected in an image of the camera, wherein control unit (30) is configured to control the golf trolley to perform an action in response to the determined action trigger.

## Description

### Technical Field

The present invention relates to the field of golf equipment and particularly to a golf trolley for helping golfers in transporting their golf bags across the course.

### Prior art

Golf trolleys of different types are known, including manual golf trolleys, which are pushed or pulled by the golfer, and electric or motorized golf trolleys. Most motorized golf trolleys work with a remote control or a radio distance sensor. There are some automated golf trolleys which try to remove the burden of control of the motorized trolley, especially golf trolleys with a follow function.

Some golf trolleys have been proposed in which the golf trolley can travel alone to a certain position input by the user or automatically determined based on the current game situation.

US2019/0151725 discloses a follow function which automatically drives the golf trolley around areas where the golf trolley cannot enter, like a bunker so that the golf trolley can continue to follow the golfer, when exiting the bunker on the other side.

US5944132 for example automatically drives to the next Tee, when the golfer enters the green. However, this solution could lead to situations where the golfer enters the green without having taken the putter, e.g. when he traverses the green to go to a bunker. It is sometimes also not practical that the golf trolley goes already up to the new Tee, as sometimes the golfer needs something from the golf trolley.

KR102607069 discloses a golf cart which follows the golfer at a certain distance. When the golfer prepares the swing, the golf cart moves in front of the golfer to film the swing.

US11707657discloses a golf trolley with a golf ball find function wherein the golf trolley is positioned behind the golfer to film the golf ball trajectory to determine the estimated landing position of the golf ball.

However, these functions require still the user input to select these functions or the trigger action for those functions do not work reliably. Also, the realizations of these functions are not always optimized for a good golfer experience.

### Brief summary of the invention

It is an object of the invention to overcome the disadvantages of the prior art, or at least provide an alternative to the prior art.

It is in particular an object of the invention to provide a golf trolley being more autonomous and improving the support provided to the golfer.

According to the invention, this object is achieved by a golf trolley comprising: wheels; a drive unit configured to drive the wheels to move the golf trolley; a camera; a control unit configured to autonomously control the golf trolley to perform actions; wherein the control unit comprises an object detector and an action trigger unit; the object detector configured to receive an image from the camera and to detect in the image a golf club taken by the golfer; and the action trigger unit configured to determine based on the detected golf club an action trigger, wherein control unit is configured to control the golf trolley to perform an action in response of the determined action trigger.

According to the invention, this object is achieved by a method for controlling a motorized golf trolley, the method comprising the following steps of a control unit of the golf trolley: Receiving from a camera an image; detecting in the image a golf club taken by the golfer; determining based on the detected golf club an action trigger; in response to the detected action trigger, control the golf trolley to perform an action.

The detection of the taken golf club in the images of the camera allows to detect certain game situations of the golfer. This allows to automatically trigger certain actions of the golf trolley in response to the golf club taken, i.e. in response to certain game situations automatically. This trigger is very robust. The use of the camera for detecting the golf club taken allows to avoid to the use of special golf clubs, e.g. golf clubs with RFIDs to detect the golf club taken.

According to the invention, this object is achieved by a golf trolley comprising: wheels; a drive unit configured to drive the wheels to move the golf trolley; a control unit configured to autonomously control the golf trolley to perform actions; wherein the control unit comprises an action trigger unit; wherein the action trigger unit is configured to determine based on the detected golf club an action trigger, wherein the control unit is configured to control the golf trolley to perform an action in response to the determined action trigger.

According to the invention, this object is achieved by a method for controlling a motorized golf trolley, the method comprising the following steps of a control unit of the golf trolley: determining an action trigger; in response to the detected action trigger, control the golf trolley to perform an action.

According to the invention, this object is achieved by computer program which is configured to perform the steps of the method for controlling the motorized golf trolley described, when the computer program is executed on a processor.

According to the invention, this object is achieved by a system comprising a golf trolley as described above and a remote computing device with a user space storing user specific data of the golfer.

The dependent claims refer to further optional embodiments of the invention.

In one embodiment, the object detector is configured to detect the type of the golf club, wherein the action trigger unit is configured to determine the action trigger based on the detected type of the golf club. This allows to trigger actions of the golf club depending on a specific golf club type or a group of golf club types. This allows to define a different action when the golfer takes a putter compared to when he takes an iron or a wood. The information of the type of golf club selected gives an important information about the game situation which can be used for defining the actions of the golf trolley, for deciding its position/orientation, for analyzing the game, swing or shot, and simply for storing this information with the game data (like shot data) gathered by the golf trolley. The type of the golf club could be a putter. The type of the golf club could be a sub-group of golf clubs (preferably not-containing the putter and/or preferably containing irons and/or woods and/or drivers).

In one embodiment, the object detector is configured to detect the number of the golf club, wherein the action trigger unit is configured to determine the action trigger based on the detected number and/or the action performed depends on the number detected. The information of the (type and) number of golf club selected gives an important information about the game situation which can be used for defining the actions of the golf trolley, for deciding its position/orientation, for analyzing the game, swing or shot, and simply for storing this information with the game data (like shot data) gathered by the golf trolley. The number allows for example to anticipate the potential distance of the golf shot to give recommendations or to find the ball hit. The number can also be used for a statistical analysis of the shot data of the user to predict the user specific distances for each type and number of golf club.

In one embodiment, the action trigger unit determines a first action trigger based on a first type and/or a first number of golf club detected and a second action trigger based on a second type and/or second number of golf club detected, wherein the control unit is configured to perform a first action, when the first action trigger is determined and to perform a second action different from the first action, when the second action trigger is determined. In one embodiment, the first action is determined based on a first type of golf club detected, and the second action trigger is determined based on the second type of golf club detected. In one embodiment, the first action is determined based on a first number of golf club detected and the second action trigger is determined based on the second number of golf club detected (both golf clubs being of the same type). This definition of multiple action triggers defined based on different types or numbers of golf clubs allows to automatically detect different golf game situations and trigger automatically different actions of the golf trolley based on the detected golf game situation or golf club.

In one embodiment, when the object detector detects a putter taken by the golfer, the action trigger unit detects a (first) action trigger, the control unit controls the golf trolley in response to the determined (first) action trigger to perform a (first) action, preferably a go-toward-the-next-tee action (without implying that there is a second action trigger and/or a second action).

In one embodiment, the control unit performs in response to the first action trigger the (first) action which navigates the golf trolley to a new position between a green of a current hole (on which the golf trolley 1 is located) and a tee of the next hole. In one embodiment, the new position of the golf trolley between the green of the current hole and the tee of the next hole is in the zone of the next hole. In another embodiment, the new position of the golf trolley between the green of the current hole and the tee of the next hole is in the zone of the next hole. The new position is outside of the green of the current hole. The new position is preferably arranged along a walking itinerary which the golfer will most likely pass when walking from the green of the current hole to the Tee of the next hole.

In one embodiment, the (first) action comprises first, to track the golfer via the camera during his putting shot(s) on the green until the golfer puts the ball in the cup of the green, and second, to move to the new position between the green of the current hole and the tee of the next hole, once the ball being put in the cup is detected. The tracking of the golfer during the putting can be used to record a video of each putting shot of the golfer, and/or to count the putting shots of the golfer for the game score. The number of putting shots and/or the video of each putting shot can be stored in a user space.

In one embodiment, when the object detector detects a golf club taken by the golfer from a specific sub-group of golf clubs, the action trigger unit detects a (second) action trigger (in response to detection in the object detector), the control unit controls the golf trolley in response to the determined (second) action trigger to perform a (second) action, preferably one or more of a shot-data-tracker action action, a club-selection-information action and a shot-video action (without implying that there is a first action trigger and/or a first action). The specific sub-group of golf clubs comprises preferably one or more iron golf clubs, wood golf clubs, hybrid golf clubs, wedges and drivers.

In one embodiment (shot-data-tracker action), the (second) action comprises the following steps performed by the control unit: detecting the type and number of the golf club (in the object detector based on the images of the camera); detect the hitting location of the ball; detecting landing location of the ball; determine shot data based on the detected hitting location and based on the detected landing location; and store the shot data determined in association with the detected type and number of the golf club. By detecting the type and the number of the golf club used for each shot, the shot data like the shot distance can be associated with the used type and number of the golf club. This allows the golf trolley to generate a completely new data source for analyzing the game of the golfer, its swing, its shots, .... Preferably, the shot data associated with the type and number of the golf club is stored in the user space of the golfer. Preferably, the shot data associated with the type and number of the golf club is used to update statistical shot data of the user for the golf club of the detected type and number. These statistical shot data for the user for the type and number of the golf club can give precise user specific statistical information about his shot distance with this type and number of golf club or other information which could have valuable information about the analysis of the swing or game of the golfer or for the selection of his club for the next shot based on the map of the golf court.

In one embodiment (club-selection-information action), the (second) action comprises the following steps performed by the control unit: detect the type and number of the golf club from an image of the camera in the object detector; detect the hitting location of the ball; detect the potential landing zone based on the hitting location of the ball and based on a distance related to the type and number of the golf club detected; determine potential landing zone information based on the potential landing zone and based on map information of the current hole; and output the potential landing zone information, preferably by displaying on a display the potential landing zone on a map of the current hole of the golf court. By automatically detecting the type and number of the golf club, the golf trolley can output seamlessly precise potential landing zones for the selected golf club. This facilitates the selection by the golfer extremely. Preferably, a user specific statistical shot distance data are used to detect the potential landing zone.

In one embodiment, the potential landing zone is detected based on a user specific statistical shot distance data for the detected type and number of the golf club, wherein the shot data in association with the detected type and number of the golf club are used to update the user specific statistical shot distance for the detected type and number of the golf club. This embodiment uses the shot-data-tracer action to get the user specific statistical shot distance data for the different types and numbers of golf clubs which then is used in the club-selection-information action to predict precisely the potential landing zones based on the user specific statistical shot distance data.

In one embodiment (shot-video action), the (second) action comprises the following steps performed by the control unit: navigate the golf trolley to a position behind the ball such that the optical axis of the camera of the golf trolley directs in the hitting direction of the golfer; and take a video of the golfer hitting the ball. The position behind the ball in the hitting direction allows to use the video for many purposes. In addition, the camera angle allows to follow the ball easily notwithstanding the high ball speed as the high ball speed is in the direction of the optical axis (neglecting the vertical component). In addition, the triggering of the video by the detection of the taken golf club automatizes the recording of the video in a very efficient way without the need that the user needs to provide user input (except maybe holding the club in the camera). The shot-video action allows several uses of the video which are herewith referred to as sub-actions.

In one embodiment (shot-tracer sub-action), the video taken is recorded in a user space, wherein the user/golfer can access the user space to watch the recorded video. The user can use the recorded video of the shot also in order to see where the ball fell in order to facilitate the finding of the ball. Preferably, the video taken is recorded in association with the game situation (e.g. in association with the hole of the golf court in which the shot took place and/or the shot number related to the hole to which the current shot belongs, e.g. second shot in hole three) and/or in relation to a location in the map data. The latter could allow to show video selection information on a map of the golf course, which allows to watch the video by selecting the video selection information on the map. The video selection information could be shown at the hitting location of the shot or the landing location of the shot or in between to allocate the video to the location of the shot in the map information. The video is preferably recorded in the user space in association with further information like the shot data, like the type and/or number of the golf club.

In one embodiment (analyse-swing sub-action), the video taken is used to analyze the swing of the golfer. The swing of the golfer is normally analyzed from a position in front of the golfer, i.e. perpendicular to the hitting direction or 45° to the golf hitting direction. By using a position behind the ball in the hitting direction of the golfer, the swing of the golfer can be analyzed not only based on the movement of the body and golf club of the golfer, but also based on the trajectory of the ball which would not be visible in a video taken from the front of the golfer. In a preferred embodiment, the swing of the golfer is analyzed based on the video taken showing the swing of the golfer and based on the video taken showing the trajectory of the ball.

In one embodiment (find-ball sub-action), wherein the type and number of the golf club is detected from an image of the camera in the object detector; wherein the ball landing location is estimated based on the video taken and based on the detected type and number of the golf club, wherein the golf trolley is configured to navigate to the estimated landing location and to search for the exact ball landing location. Preferably, the ball landing location is estimated based on a hitting direction detected from the video taken and based on a shot distance detected based on the type and number of the golf club. Preferably, the shot distance is a user specific statistical shot distance obtained from previous shot of the user with the detected type and number of the golf club. Preferably, the shot distance is determined based on the (user specific statistical) shot distance obtained from the detected type and number of the user and based on the trajectory information from the video, preferably based on trajectory information relating to the vertical ball movement like the maximum height of the ball (eventually normalized by the orientation or vertical inclination of the optical axis of the camera), the time when the maximum height has been achieved, the time of flight of the ball until it hits the ground, the speed of the golf club hitting the ball. In one embodiment, a shot distance ML estimator could be used to estimate the estimated shot distance based on the features of the video (preferably one or more of the mentioned vertical ball movement parameters) and based on the type and number of the golf club. The true landing position determined in the shot-data-tracer action could be used to use each shot as learning data to continuously improve the ML engine.

In one embodiment, the golf trolley is configured to receive golf club configuration data specifying for the detected type and optionally also the number of the golf club information relating to a specific golf club. Preferably, this golf club configuration data is received via a user input.

In one embodiment, the golf club configuration data is used to improve the detection of the type and/or number of the golf club. Preferably, the golf club configuration data contains design information of the specific golf club of a specific type (and number) which allows the object detector to detect the golf club of the specific type (and number) with a higher robustness. The design information can be for example one or more images of the specific golf club. The design information could be also general information on the form, the drawings on the club, the writings on the club and/or based on trademark signs on the club. The images of the specific golf club could be uploaded by a user or could be pre-stored in a club-database.

In one embodiment, the golf club configuration data is used to generate statistical shot data based on the specific golf club used (e.g. in the shot-data-tracker action). Thus, for a golfer using a first specific golf club of a first type and a first number with first golf club configuration data and using also a second specific golf club of the same first type and the same first number with a second golf club configuration date, the golf trolley generates statistical shot data for the first specific golf club when the user uses the first specific golf club and generates statistical shot data for the second specific golf club, when the user uses the second specific golf club. This allows to compare his performance with different golf clubs. The golf trolley knows preferably which specific golf club it is using by a user input (select in configuration data the currently used golf clubs) or by automatic detection via the object detector. The golf club specific statistical shot distance data of the specific golf club could be used to determine a better estimate for the shot distance when the specific golf club is detected.

In one embodiment, the first action trigger (triggering the go-towards-the-next-tee action) is detected based on any other condition than the detection of a golf club or a putter. The first action trigger could be based on the detection of a user input gesture performed by the golfer, preferably a hand gesture, based on other user input via a user input means, based on a detection of a defined game situation (e.g. golfer entering the green), or based on detecting in the object detector the user putting the ball in the cup of the green.

In one embodiment, the second action trigger (triggering the shot-data-tracker action, the club-selection-information action or the shot-video action) is detected based on any other condition than the detection of a golf club or the described sub-group of types of golf clubs. The second action trigger could be based on the detection of a user input gesture performed by the golfer, preferably a hand gesture, based on other user input via a user input means, based on a detection of a defined game situation (e.g. golfer preparing to hit the ball outside the green).

Other embodiments according to the present invention are mentioned in the appended claims and the subsequent description of an embodiment of the invention.

### Brief description of the Drawings

Exemplary embodiments of the invention are described using the figures. It is to be understood that these figures merely serve as examples of how the invention can be implemented and are in no way intended to be construed as limiting for the scope of the invention and the claims. Like features are indicated by like reference numerals along the figures. In the figures:
Fig. 1 is a schematic view of the functional elements of a golf trolley;
Figs. 2 is an exemplary three-dimensional view of a motorized golf trolley;
Fig. 3 is a schematic cross-sectional view showing the front part of a base frame of the golf trolley of Fig. 2;
Fig. 4 is a schematic cross-sectional view showing the back part of a base frame of the golf trolley of Fig. 2;
Figs. 5 is a schematic view of a system comprising a golf trolley and a remote computing device;
Fig. 6 shows a go-towards-the-next-tee action as an exemplary action to be performed by the golf trolley;
Fig. 7 shows a shot-data-tracker action as an exemplary action to be performed by the golf trolley;
Fig. 8 shows club-selection-information action as an exemplary action to be performed by the golf trolley;
Fig. 9 shows a shot-video action as an exemplary action to be performed by the golf trolley;
Fig. 10 shows a find-ball sub-action, an exemplary sub-action of the shot-video action.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

A golf trolley is a vehicle configured for driving on a golf course (without damaging the fairway when driving on it). The golf trolley is preferably configured to automatically/autonomously driving on the golf course. The golf trolley is preferably a device designed to carry a golfer's equipment, e.g. a golf bag, clubs, and other accessories, across a golf course. Thus, the golf trolley allows to reduce the physical burden on the golfers by transporting their equipment. Most preferably, the golf trolley is configured to transport the golf bag with the golf clubs for a golfer. Such a golf bag or equipment transporting golf trolley is sometimes also called golf cart or caddy cart. However, in a less preferred embodiment it would also be possible that the golf trolley is a robot driving on the golf court configured for the subsequently described functions without the capacity to transport the golf bag of the golfer (. Most preferably, the golf trolley according to the invention is preferably not configured to transport a person/user/golfer and/or does not have any part configured to transport this person/user/golfer (like on a seat or a standing platform for the user). In the most preferred embodiment, the golf trolley is configured to transport the golf bag of the golfer without transporting the golfer.

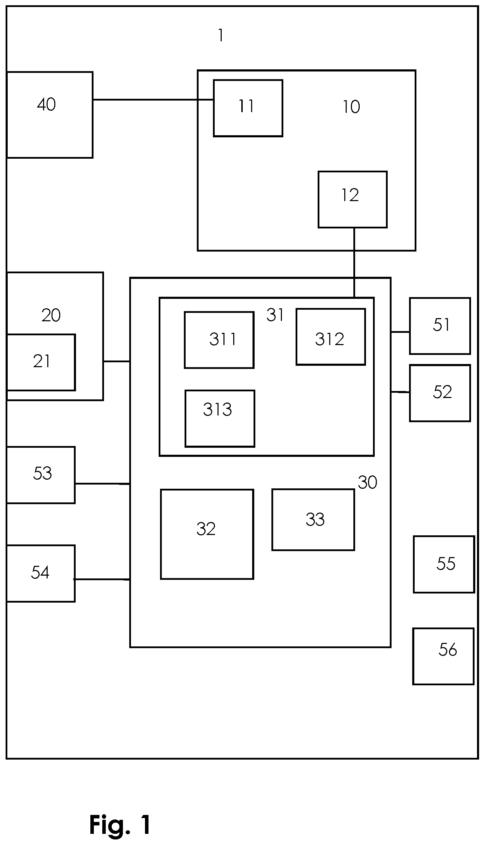

Fig. 1 shows a schematic view of the functional units of an embodiment of the golf trolley according to the invention. The term "unit" is not limited to a mechanical or electronic or physical unit, but such a unit or parts of it could be integrated as a software function in a processor or a chip. Different units can be combined in one chip or unit. One unit could be integrated in two different physical parts.

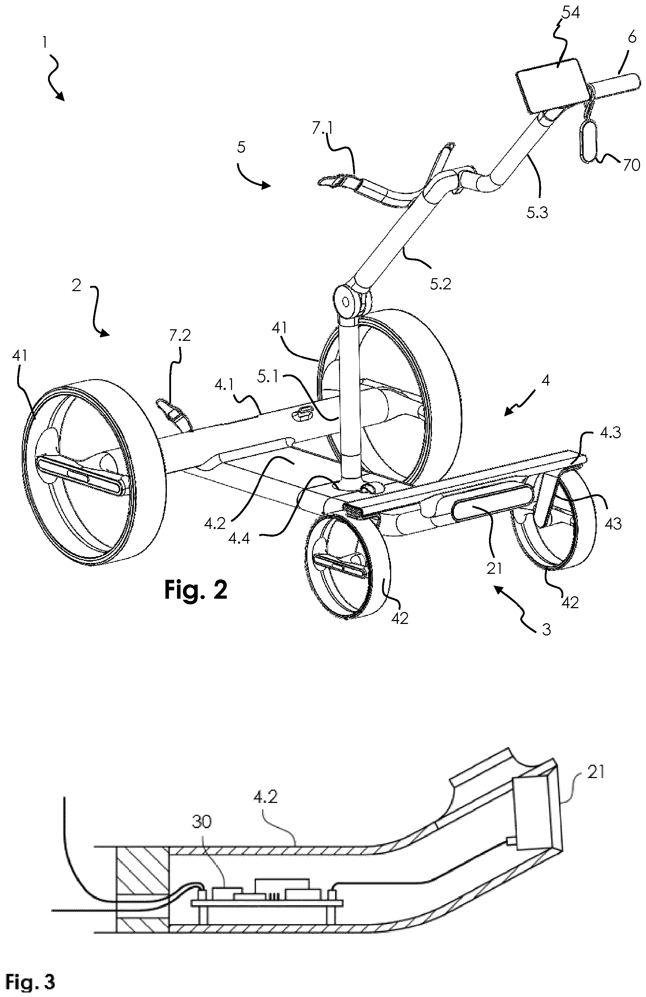

Fig. 2 shows a three-dimensional view of an exemplary embodiment of the golf trolley 1.

The golf trolley 1 according to the invention comprises wheels 40. The wheels 40 comprise preferably at least three wheels, preferably four or more wheels. The wheels 40 comprise preferably at least one driven wheel 41, preferably two driven wheels 41. The two driven wheels 41 are arranged on the same axle or are supported rotatable around the same axis of rotation of the wheels 41. The driven wheels 41 are preferably drivable independently, e.g. by two independent motors. This allows to drive the two wheels 41 at different speeds in order to steer or turn the golf trolley 1. The wheels 40 comprise preferably at least one pivotable wheel 42, preferably two pivotable wheels. The at least one pivotable wheel 41 is preferably passively pivotable, e.g. it pivots when the driven wheels 41 are controlled at different speeds to turn the golf trolley, so that the pivotable wheel(s) 42 follow the driving or turning direction of the golf trolley 1 imposed by the driven wheels 41. However, it would obviously also be possible to have an active steering mechanism in order to achieve the turning of the golf trolley 1. The pivotable wheels 42 are supported on a wheel lever 43 which is supported pivotably around a pivoting axis which is preferably arranged (substantially) vertical. The pivotable wheels 42 are rotatably arranged around the wheel axis in the wheel lever 43. The rotation of the wheel 42 around the wheel axis is inferred by the forward movement of the golf trolley (while the rotation around the pivot axis is caused by a turning of the golf trolley 1. The driven wheels 41 are preferably larger than the pivotable wheel(s) 42. The two driven wheels 41 are preferably arranged on a first side 2 in the driving direction and the at least one pivotable wheel 42 is arranged on a second side 3 in the driving direction. The second side 3 is preferably the front 3 of the golf trolley, i.e. the direction of the golf trolley 1 in which it moves forward. The first side 2 is preferably the back 2 of the golf trolley, i.e. the direction of the golf trolley 1 in which it moves backwards. The described four-wheel design of the golf trolley 1 makes the golf trolley 1 robust against tumbling.

The golf trolley 1 has a base frame 4 which is preferably horizontally arranged and supports the wheels 40. The base frame 4 comprises preferably a central connection element 4.2 and two parallel wheel support elements 4.1 and 4.3. The base frame 4 with the elements 4.1, 4.2, 4.3 are arranged in a H-shaped form and/or such that the wheel support elements 4.1 and 4.3 are arranged parallel to each other and that the wheel support element(s) 4.1 and/or 4.3 is/are perpendicular to the central connection element 4.2.

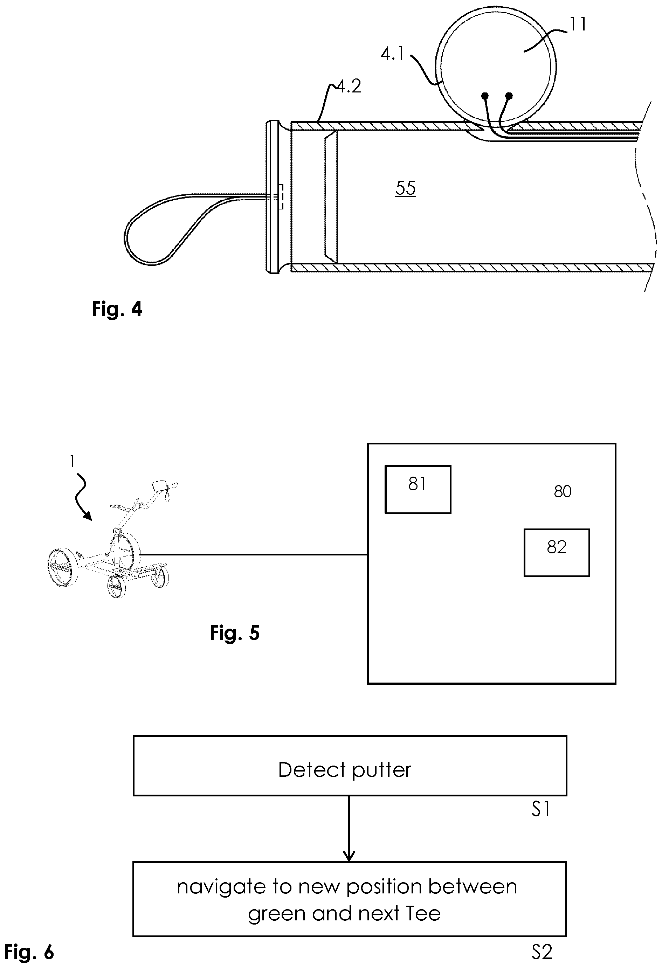

The base frame 4, preferably the central connection element 4.2 (which is preferably a hollow tube) is configured to host electronic components like the camera 21 in the front 3 and/or the control unit 30 and/or the battery 55. Fig. 3 shows a cross-sectional view of the central connection element on the second side 3 with the camera 21 and the control unit 30. Fig. 4 shows a cross-sectional view of the central connection element 4.2 with the battery 55 which is insertable from the first side 2. The first wheel support element 4.1 supports the driven wheels 41. The first wheel support element 4.1 extends preferably in the direction of the rotation axis of the driven wheels 41. The first wheel support element 4.1 hosts preferably the motor unit 11, preferably the two motors driving the two driven wheels 41. Even if this arrangement is particularly advantageous for obtaining a very stable motorized golf trolley, it is obvious that another arrangement of the electric components and any other design of the base frame 4 is possible.

The golf trolley 1 is preferably designed such that the golf bag is supported/hold on the golf trolley 1 in a direction in which the bottom of the golf bag is arranged on the first side 2 and the upper side of the golf bag (from which the golf clubs can be taken out and/or from which the club heads protrude from the golf bag) is arranged on the second side 3 such that the golf bag is arranged inclined in a way that the upper part of the golf bag is arranged above the bottom part. Thus, the golf bag will be held such that the golf bag extends diagonally upwards from its bottom towards its upper part of the golf bag. This makes the golf trolley 1 particularly stable. The golf trolley 1 comprises preferably a support element 5 to hold the golf bag in this position and/or to manually drive the golf trolley 1 with a handle 6. The support element 5 extends preferably from the centre of the base frame 4, preferably of the central connection element 4.2 between the driven wheels 41 and the pivotable wheels 42 with respect to the driving direction at the connection point 4.4. The support element 5 extends with a first part 5.1 upwards and then with a second part 5.2 upwards and towards the second side 3. A third part 5.3 extends substantially in the direction of the second part 5.2 but allows to change the angle between the two parts 5.2 and 5.3 to change the height of the handle 6. The handle 6 is arranged on the distal end of the support element 5 or the part 5.3. Preferably, a display 54 is arranged as well on the support element 5, preferably on its distal end, preferably on the third part 5.3. The display 54 can act as user output unit 54 for giving out user output. The display 54 could be a touch screen and act also as user input unit 53. The golf trolley 1 comprises preferably further golf bag fixation means 7 to keep the golf bag in its position. The golf bag fixation means 7 has preferably a fixation means 7.1 on the support element 5, preferably 5.2 to fix the central or upper part of the golf bag. The golf bag fixation means 7 has preferably a fixation means 7.2 on the base frame 4, preferably on its first end 2 to fix the bottom part of the golf bag.

As already mentioned above, the described design of the golf trolley 1, even if very advantageous for motorized and autonomous golf trolleys, is just one example and can be varied in many ways without leaving the scope of the present invention. The golf trolley 1 according to the invention is a motorized golf trolley. The golf trolley 1 according to the invention is configured to automatically and/or autonomously control the movement and/or actions of the golf trolley 1.

As shown in Fig. 1, the golf trolley 1 according to the invention comprises wheels 40, a drive unit 10, a sensor unit 20 and a control unit 30.

The drive unit 10 is configured to control the wheels 40 such to move the golf trolley 1. The drive unit 10 is configured to control the wheels 40 such to move the golf trolley 1 forward and to turn or steer the golf trolley 1, i.e. to change its driving direction. The drive unit 10 comprises therefore a motor unit 11 and a drive control unit 12. The motor unit 11 comprises at least one motor to drive at least one of the wheels 40, preferably the driven wheels 41 as explained above. Preferably, the motor unit 11 comprises two motors, each driving independently one driven wheel 41. The drive control unit 12 is configured to receive a drive information allowing to control the movement of the golf trolley 1. The drive information can for example be the speed and direction of the golf trolley. The drive control unit 12 translates the drive information into the motor control information to control the motor unit 11. The motor control information can be the phase current/voltage for the one or more phases of the motor winding(s) of the at least one motor. Obviously, the motor control information can also be different depending on the type of motor used. In case of two independent motors for driving the two driven wheels 41, the drive information corresponding to the direction and the speed could be translated in the two different speeds for the two wheels 41 which then could be translated each as the motor control information for the two motors. However, it is also possible to receive already the two wheel or motor speeds as drive information from the control unit 30. The conversion of the drive information into the motor control information can be realized partly or fully also already in the control unit 30.

The sensor unit 20 is configured to sense information from the environment around the golf trolley 1 in order to control the golf trolley 1. The sensor unit 20 is preferably configured to detect a golfer, e.g. to follow the golfer or to detect certain game situations of the golfer. The sensor unit 20 comprises at least one camera 21. The camera 21 is preferably a camera 21 detecting light images in the visible light spectrum. The camera 21 is preferably a stereo camera. The stereo camera allows to quickly identify objects like humans (or golfers) or other objects, but also to determine the distance to the detected objects. This allows to realize a robust follow the golfer function without a further distance measurement technology like a remote control-based distance measurement. Subsequently, the different functions of the camera 21 will be described. It is obvious that it is also possible that the camera 21 has multiple cameras used for different functions, e.g. one to realize the follow function and another to detect the golf clubs as will be described in more detail later. The camera 21 can be operated preferably with different sampling rates, i.e. the repetition rate to take a new image. The sampling rate of the camera 21 can be controlled based on the mode of the golf trolley. For example, if the golf trolley 1 is a passive mode (the control unit 30 waiting for input from the camera 21 to change in a new mode), the sampling rate can be rather low, e.g. one image every second to detect an object which could trigger a change of mode. When the golf trolley 1 is in a follow mode in which it needs to follow the user/golfer, the sampling rate could be controlled to a (higher) rate (than in the waiting mode) at which the golfer is not lost and a smooth movement control of the golf trolley 1 is possible, e.g. between 2 images and 25 images per second. For taking a video of the swing or the golf ball trajectory, a higher sampling rate (compared to the follow mode) could be used for getting a smooth video of the golf club or ball moving with a high velocity. However, it would obviously also possible to run the camera 21 always at the same speed. For the stereo camera, it would also be possible to run for the phases of object detection (in which not a specific object distance is needed), only one of the two cameras of the stereo camera is operated and only when the distance is needed, the second camera of the stereo camera 21 is used.

The control unit 30 is configured to control the behaviour of the golf trolley 1. The control unit 30 is configured to perform actions of the golf trolley 1. The control unit 30 is configured to navigate the golf trolley 1 on the golf court. The actions of the golf trolley 1 include generally two types of actions, movement actions, i.e. navigating the golf trolley, and trolley actions. Movement actions can be movements involving a change of position/location of the golf trolley 1 on the golf court or movements involving a change of orientation of the golf trolley 1 (without necessarily changing the current position) or combinations of the two. Trolley actions are all other actions performed by the trolley 1 which are not movement actions. They will be described later. The movement actions can also be called navigation actions.

The control unit 30 comprises a navigation unit 31 configured to navigate the golf trolley 1 and/or to perform the movement actions of the golf trolley 1.

The navigation unit 31 comprises an automatic move unit 311. The automatic move unit 311 is configured to receive a movement/navigation input from the action trigger unit 32 to perform a certain movement action of the golf trolley 1 in response to the action trigger unit 32 detecting an action trigger. In other words, the automatic move unit 311 navigates the golf trolley 1 to a new position and/or orientation, in response to a detected action trigger. At least some detected action triggers are the detection of a golf club as. The different action triggers will be described later in more detail. The movement/navigation input can contain the new position or the new itinerary for the golf trolley 1 or the automatic move unit 311 can determine based on the received movement/navigation input the new position or itinerary for the golf trolley 1. For example, the movement/navigation input could be just the information that the action trigger has been detected. The automatic move unit 311 allows thus to automatically move the golf trolley 1, when certain action triggers have been detected. This allows a more automatic behaviour of the golf trolley 1 beyond a simple follow mode or a mode in which the golf trolley 1 moves automatically to a location input by the user.

The navigation unit 31 is preferably further configured to navigate the golf trolley 1 on the golf court. Preferably, the navigation unit 31 receives the current position from a location unit 51. The navigation unit 31 can use the current location to navigate on the golf court. Preferably, the navigation unit 31 receives further map information about the golf course which can be used to navigate the golf trolley 1 on the golf court using the current location of the golf trolley 1 and the map information. This can be used to drive the golf trolley 1 to a certain point on the golf court defined in the map information and/or to avoid certain no-go areas on the golf court like the green, like zone prohibited for golf trolleys 1, like zone where the golf trolley 1 cannot safely drive like in a bunker or on a steep area. Even if the navigation based on the current location of the golf trolley 1 and/or based on the map information is preferred, the invention can also be realized without this location- and/or map-based navigation.

The golf trolley 1 comprises preferably further navigation modes than the action trigger mode like a follow mode and/or a user input navigation mode. Therefore, the navigation unit 31 could optionally comprise a follow unit 312 and/or a user input navigation mode unit 313.

The follow unit 312 or the follow mode is configured to move/navigate the golf trolley 1 such that the golf trolley 1 moves with the golfer, preferably follows the golfer. Preferably, the follow unit 312 or the follow mode is configured to move/navigate the golf trolley 1 such that the golf trolley 1 moves with/follows the golfer within a defined distance range. That means that the golf trolley moves as the golfer with a defined distance range close to the golfer. The distance range is normally more distant from the golfer than 1 m, preferably than 2m and/or is normally less distant than 20 m, preferably than 15 m, preferably than 10 m, preferably than 8m. The follow unit 312 or the follow mode is configured to control the position of the golf trolley 1 such that it remains at a certain distance from the golfer. The follow unit 312 receives therefore the position of the golfer from an object detector 33 described in more detail later. The position of the golfer is preferably a relative position of the golfer with respect to the golf trolley 1. Such a relative position with respect to the golf trolley 1 allows to have a simple control which compares the relative position of the golfer with a reference position and navigates the golf trolley 1 such that the golfer remains close to the reference position. Alternatively, the follow unit 312 could obtain also an absolute position of the golfer, e.g. from a remote control 70 carried by the golfer, and then calculate the relative position based on the current position of the golf trolley 1. It would also be possible to follow the golfer simply by keeping the golfer in the field of view of the camera such that the golfer has a certain size in the image of the camera. In this case, the follow unit 31 would receive simply the image of the golfer from the camera 21. The follow mode could also be realized by other distance measurements or positioning measurements of the golfer, e.g. a radio transmission from a remote control 70 carried by the golfer. But preferably, the follow function is realized based on the golfer detected in the image of the camera 21 as will be described in more detail below.

The user input navigation mode unit 313 is configured to receive a user input to navigate the golf trolley 1 based on the user input. This user input could be simply the direct user input controlling speed and direction of the golf trolley 1. These user commands can be received for example from the remote control 70. The user input could also be a location on the golf court from the user input means 54 so that the user input navigation mode unit can navigate the golf trolley 1 to this received location. The location can be input by the user by a selection menu offering a selected number of locations like go to the next Tee, go the green, come to me.... The come to me function can for example be realized by a button on the remote control. The location can be input also by indicating a location on a map shown on the display, e.g. by touching the touch screen 54 at a certain point on the shown map of the golf court.

The control unit 30 comprises further an object detector 33. The object detector 33 is configured to detect objects around the golf trolley 1 based on the image received from the camera 21. The object detector 33 uses preferably image recognition to detect the objects. The object detector 33 or the image recognition uses preferably an object detection machine learning (ML) engine to detect the objects. The object detection ML engine is trained with training images annotated with the desired output information (presence of object: yes or no, if the object is present, where in the image the object is present). The desired output information is the presence of the object in the image (present or not present), preferably also where in the image the object is present. It is possible that the output information contains further details on the object. The (trained) object detection ML engine will thus receive the image from the camera 21 and output the output information including at least, if the object is present in the image or not, and preferably where in the image the object was detected.

The object detector 33 is configured to detect golf clubs (for the action trigger unit 32). The object detector 33 is preferably further configured to detect humans or golfers (for the follow function and/or for the action trigger function). Preferably, the object detector 33 can detect also specific humans or distinguish different humans/golfers among each other (e.g. to follow the correct golfer or to detect the action trigger related to the correct golfer). The object detector can preferably detect further objects like obstacles (e.g. trees, water, cliffs, rocks, ...), golf court elements (e.g. driveways, green, bunker, water, Tee, ...), the golf ball, etc. In one embodiment, the object detector 33 can detect also specific body poses or body part poses (for gesture recognition as user input). While for common objects like humans, obstacles, certain body part poses like thumbs up, waving, ..., pre-trained object detector ML engines exist. Other more specific object might require specific training like the detection of golf clubs, golf balls, etc. The object detector 33 can obviously detect multiple objects in the same image. The object detector 33 can use the same ML engine for detecting different objects or could use distinct ML engines for different objects or sub-groups of objects. The object detector 33 receives preferably periodically an image from the camera 21. The object detector 33 could receive all images taken by the camera 21 and perform the object detection in the object detector 33. However, it is also possible to jump some images taken with the camera 21 for the object detection depending on the mode of the golf trolley 1 and depending on the object to detect.

Some objects to detect are also related to a certain movement. In this case, once the respective object is detected, multiple subsequent images from the camera 21 are used to detect the pre-defined movement of the object. The sampling rate of the subsequent images used might depend also on the type and velocity of the movement to detect. Movements can be for example a golf swing, a certain hand gesture like waving, .... Subsequently, we are talking only about the detection of an object in an image, but this should always include the possibility of the detection of a certain movement of such an object in a series of images. It is also possible that the object is only considered as detected when it was detected in multiple subsequent images to increase the robustness of the detection.

Once an object is detected in the image received from the camera 21, further object information can be retrieved from the image (or from previous images or future images showing the same object). Such a further object information can for example be the relative position or distance of the object with respect to the golf trolley 1. This relative position or distance can be determined preferably by a stereo image analysis of the object. However, the relative position or distance can also be roughly determined by the size of the object in the image. For example, the size of the object could be used as a first trigger before a more precise relative position or distance is determined with the stereo image analysis. Instead of a stereo image analysis, also other distance or position sensors could be used like time-of-flight (TOF) cameras, Lidar sensors, ultrasound sensors, etc. to determine the distance or relative position of the object detected in the image. The distance or relative position might not be need for all objects, but might be useful for the human/golfer detected for the follow function or for the golf club shown in the field of view camera 21 at a predetermined distance or image size (size of the golf club in the image) or for a ball recorded in a ball follow function in a sequence of images or for obstacles or no-go zones for avoiding them. Other object information could be object image information, i.e. object information that can be retrieved by an image processing of the image, preferably of the parts of the image in which the object was detected. Object image information shall be any information about the detected object which can be retrieved from the image. The image processing could be another ML engine detecting the object image information. The image processing could also be an OCR detection or other classical image recognition techniques. The image processing for obtaining the object image information could be also the same ML engine which has detected already the object. In this case, the output information would not only provide the presence of the object and its position in the image, but also the further object image information.

For example, the object image information for a golf club could be the type of the golf club and/or the number of the golf club. The type of golf club taken comprises one or more of: a putter, a non-putter, an iron, a wood, a hybrid, a wedge (or directly the specific wedges like an approach or a sand), a driver, etc. A non-putter would comprise all other clubs than a putter. A type of golf club can also be a sub-group of golf clubs related to the same action to be triggered by the detection of this sub-group of golf clubs. In a preferred embodiment, the golf club detector 32 is configured to detect the number (of the type) of golf club taken. For example, irons exist in different numbers, like iron 1 to iron 9, most golfers carry however not all iron numbers, normally iron 3 to 9 are carried by the golfer or another sub-set of iron numbers. For example, woods exist in different numbers like wood 1 to wood 5, sometimes even higher numbers. For example, hybrid clubs exist in numbers 1 to 12. There are also special irons like wedges. There is a sand wedge/iron or an approach wedge/iron. Such a sand or approach club can be considered as type of club or as a special "number" of the iron or wedge, because the sand is indicated by the "number" S on the club head and the approach is indicated by the "number" P on the club head. The numbers of the golf clubs define normally a combination of length (range) and angle of the hitting surface. The number of the golf club (numbers for irons, woods and hybrids). For special clubs like the sand wedge/iron or the approach wedge/iron, they are marked with a S for sand and a P for approach (which can be considered as the number of the iron or the type of the club). So, the type and/or number could be detected by an alphanumeric detection in the image parts showing the golf club detected. The type (putter, iron, wood, hybrid) can normally be detected based on the form of the club. This can easily be detected by a ML based object detection as explained above. The training images are showing the golf clubs (maybe just the part of the image showing the golf club in a two stage ML detection) are annotated with the information about the type of the golf club. This detection of the type and/or number of the golf club necessitates that the golf club head is shown sufficiently close to the camera 21. Therefore, preferably the golf club is considered only as detected when it is hold sufficiently close to the camera 21.

The golfer/user can improve the detection of the golf clubs and/or the object information about the golf clubs by golf club configuration data. The golf club configuration data could additionally or alternatively also be used to generate statistical data for different specific golf clubs of the same type and number (if for each specific golf club, a golf club configuration data is present). Golf club configuration data could comprise more detailed golf club information about the golf clubs used by the golfer/user. This golf club configuration data can be stored in the user space 55 and/or 81 of the user/golfer. The golf club configuration data could comprise the specific club used associated with information about the golf club. The information about the golf club could comprise images of the golf club used to improve the learning of object detection ML engine for detecting this specific golf club. These images of the specific golf club could be made by the user or could be retrieved from a golf club database 82 on the server 80. The golf club database 82 could directly store the images of the golf club database 82 or also directly store the object detection ML engine configuration data for detecting this specific golf club. With the knowledge that the user has this golf club in his set, he can improve the detection robustness significantly. In addition, the golf club configuration data can contain further data about the golf club like one or more of the length of the club, the lie angle (angle of the shaft towards the ground), the loft angle (angle of the face of the club head towards the shaft), the weight of the club head, the type of the club (iron, wood, hybrid, driver, putter, wedge, sand, approach, ...), the number (normally number between 1 and 15 depending on the type of club), standard hitting distance, .... Those more detailed data could be used for calculating statistics on the user data, for outputting warnings for having selected the wrong club (e.g. if the standard hitting distance would bring a bunker or water in the hitting distance), for recommending a club, for predicting the landing point of a golf ball hit, and for many more. Thus, when the user inputs the golf club configuration data in the golf trolley 1 (preferably in its user space 56, 82), the golf club detection in the object detector 33 can be improved and/or the use of the detected golf club can be improved as more details about these clubs are available. However, if such golf club configuration data are missing, average values for the type and number of the golf club can be used. The golf club configuration data are obtained preferably by user input, e.g. by selecting the type of golf club from a database or by taking one or more images via the camera 21 of the golf club and inputting identification information. However, it is also possible that the object detector 33 contains also golf club configuration data and the object detector 33 automatically also detects the specific golf club used. However, it is preferred for higher robustness that the golf club configuration data are input by the user or at least confirmed by the user.

The control unit 30 comprises further the action trigger unit 32. The action trigger unit 32 detects an action trigger. The action trigger is preferably related to the golfer. The action trigger is preferably related to a certain game situation, preferably of the golfer. The action trigger is preferably detected based on an object detected in the object detector 33 (or in the images from the camera 21) and/or based on the object information of the detected object. When an action trigger is detected, the action trigger unit 32 controls the golf trolley 1 to take an action. The action can be a movement action, a trolley action or a combination of the two. Preferably, the action trigger unit 32 has multiple (at least two) different action triggers defined, which trigger each different actions of the golf trolley 1.

According to the invention, the action trigger (at least one of the action triggers defined) is identified based on a golf club detected in the object detector 33.

In a preferred embodiment, the action trigger is only detected, when the golf club (head) is hold by the user in the field of view of the camera 21. This has the big advantage that it combines the automatic detection of a game situation by detecting actually the golf club with the declaration of the user's will for a certain action to be triggered. It is thus a mixture of a gesture control (which normally work with parts of the body) and an automatic detection of golf game situations, namely the golf club. To distinguish, if the user holds actively the golf club in the field of view of the camera 21, there are many different possibilities. In a first embodiment, this can be detected based on the image size of the golf club (head) in the image of the camera 21, i.e. the action trigger is only identified/detected, if the image size is larger than a threshold. The image size could be defined as a certain dimension of the golf club, e.g. the surface area covered by the club head, the largest diameter through the club head, or any other dimension which could define the image size. In a second embodiment, this can be detected based on the distance of the golf club to the golf trolley 1 or camera 21. This distance can be detected e.g. by the stereo camera or by other distance measurement means of the golf trolley 1. The action trigger would then be detected only if the golf club (head) is closer than a threshold. In a third embodiment, the action trigger is detected based on the time the golf club is held in the field of view in the camera. For example, if the golf club (head) is hold longer than a certain pre-defined time in the field of view of the camera (maybe without moving too much), the trigger action is identified). The third embodiment could be well combined with the first and/or second embodiment, such that the golf club (head) must have longer than a predetermined time have an image size larger than a threshold and/or a distance smaller than a threshold. It is obviously also possible to combine the first and second embodiment.

In an alternative embodiment, it is also possible that the detection with the camera 21 of the user taking a golf club can also realized without necessitating the golfer to actively hold the club in the camera 21. This can for example be detected by the behaviour of the user. For example, a user coming to the golf trolley 1 without a club and going away from the golf trolley 1 with a golf club. An alternative way of detecting that the user has taken a golf club is detecting the golfer preparing for a swing (which intrinsically involves a golf club). The type of the golf club could be detected for example from the type of swing (swing is different for iron/wood, approach or putter) or from the position on the golf court (at the tee, the golf club is a driver or a wood; on the green, the golf club is a putter; in the bunker, the golf club is a sand club).

Preferably, the action trigger is preferably linked to further conditions meaning that the action trigger is only detected, if the golf club is detected as described above and if the further condition is fulfilled. The further condition is preferably based on the type of the golf club. A certain action can be linked to a putter (as action trigger). Another action can be linked to the detection of a non-putter or to the detection of an iron (as action trigger). The action can be further linked to the number of the golf club (as further condition for the action trigger).

Preferably, the action trigger unit 32 defines a plurality of action triggers, each linked to a different action of the golf trolley. However, it would also be possible, that the golf trolley 1 defines only one action trigger related to only one action of the golf trolley 1. Preferably, the action trigger unit 32 defines a first action trigger based on a first type of a golf club triggering a first action of the golf trolley 1, and the action trigger unit 32 defines a second action trigger based on a second type of a golf club triggering a second action of the golf trolley 1, wherein the second action of the golf trolley 1 is different than the first action.

The golf trolley 1 comprises preferably further a location unit 51. The location unit 51 is configured to provide the current location of the golf trolley 1. The current location is preferably determined in a fixed coordinate system, like earth location data. The location unit 51 can be a receiver of a Global Navigation Satellite System (GNSS). GNSS should by definition also include regional navigation satellite systems (RNSS) like QZSS, GAGAN, EGNOS. The precision of the GNSS system can be improved by common measures the use of multiple GNSS systems like two or more of GPS, GLONASS, BDS, Galileo. Other improvements can be obtained by GNSS augmentation or Real Time Kinematic (RTK) GNSS. However, it is also possible to use local location system which detect the position of the golf trolley 1 by a receiver of a local triangulation network. Such a local triangulation network could work based on multiple base stations arranged over the golf court, preferably radio base stations. These radio base stations can be WAN, WLAN, UWB radio networks. It is also possible to detect the location based on video recognition systems installed over the golf court, wherein the location unit 51 of the golf trolley 1 receives its location from a central system of the golf court. Many other possibilities are possible to detect the location of the golf court.

The golf trolley 1 comprises preferably further a map unit 52. The map unit 52 provides preferably map information about the golf court. The map information comprises preferably for a golf court a zone of the hole for each of the holes of the golf court. The golf court has normally 18 or 9 holes. The zone of a hole is defined by the zone containing game area between the tee and the cup/hole in which the golf ball must be targeted to finalize the hole, this game area of the hole comprises normally the green around the cup, the fairway between the green and the tee and the rough around the fairway and green. The zone of the hole comprises also the obstacles/hazards like sand bunkers or water hazards in the fairway or rough. The map information comprises preferably the position of the green. The map information comprises preferably the position of the cup. The cup is the hole in the green to which the golf ball must be targeted. In order to distinguish the cup from the hole of the golf court in the sense of the zone of the hole, the cup in the green is called cup and not hole. The map information comprises preferably the position of the tee, preferably of the different tee boxes. This map information comprises one or more of obstacle location information, no-go zone location information, green zone location information, Tee location information, preferred itinerary information, bunker location information, water location information, golf road location information. The map information could be shown on the display 54.

The golf trolley 1 comprises preferably further a user input means 53. The user input means 53 is configured to receive user input. Preferably, the user input means 53 is a touch screen 54 which forms a combined user input and output means 53, 54. The user input means 53 could alternatively or additionally be an audio input means (like a microphone) to receive voice commands and/or a video input means (like the camera 21) to receive gestures defined for certain actions. The user input means 53 could also be a communication interface to receive the user commands from a mobile device of the user, e.g. via Bluetooth (registered trademark). The mobile device can for example be a smartphone. The mobile device could also be the remote control 70.

The golf trolley 1 comprises preferably further a user output means 54. The user output means 54 is configured to output information to the user or golfer. The user output means 54 is preferably a display. The display is preferably arranged on the support element 5, preferably close to or at the handle 6. However, the user output means 54 could comprise alternatively or additionally also audio output means to provide audio output information to the user/golfer. The user output means 54 could also be a communication interface sending output information to a mobile device of the user, e.g. via Bluetooth (registered trademark). The mobile device can for example be a smartphone. The mobile device could also be the remote control 70.

The golf trolley 1 comprises further a power source 55. The power source 55 is preferably a battery. The power source 55 is configured to provide the power for the electronic components of the golf trolley 1 described above.

The golf trolley 1 comprises preferably a user space 56 for storing user specific data. If multiple users use the golf trolley 1, each user can have its own user space 56 to store his specific data. The user space 56 can store configuration data, e.g. the golf club configuration data as described already above. The user space 56 can store further the videos related to the user/golfer. The videos can be videos of shots and/or of swings of the user. The user space 56 can store further statistical data on the user like the average distance of the balls hit for each golf club of the user. The data on the user space 56 of the golf trolley 1 are preferably sent to a remote computing device 80, preferably a server 80 as shown exemplary in Fig. 5 and/or received from such a remote computing device 80. Preferably, the user space 56 on the golf trolley 1 is synchronized to the user space 81 on the remote computing device 80. However, it is also possible that only a small amount of user data is stored on the user space 56 on the golf trolley 1 (e.g. only the user configuration data), while the main data like the user videos are stored online. The user space 81 can also be fully arranged in the cloud and the user space 56 on the golf trolley 1 is only a temporary storage for temporary storing the user data downloaded from the user space 81 in the cloud or on the server 80.

The golf trolley 1 is preferably configured to connect to the server 80 directly or indirectly. The golf trolley 1 could connect directly via a cellular phone network, via a WLAN or WAN network or any other network allowing a direct connection to the internet to the server 80. The connection could also be not in real time. For example, the user data are stored during one golf game on the respective local user space 56 of the golf trolley 1 and uploaded to (the user space 81 of) the server 80 the next time the golf trolley 1 is connected to the internet, e.g. when it finds a WIFI or WLAN connection. It is alternatively or additionally also possible that the golf trolley 1 connects via a Bluetooth or other local network to an intermediate device like a smartphone or a tablet to exchange the user data with the server 80. The intermediate device could receive the user data from the local user space of the golf trolley and upload them on the server 80. Client devices can be used to connect to the user space on the server using a user authentication (e.g. username and password). The golf trolley 1 can connect to the user space 81 on the server 80 by inputting its user authentication in the golf trolley 1. Also, other client devices could connect to the user space 81 on the server 80 in order to access and/or edit the user data. Other client devices might be smartphones or tablets or personal computers. The access can be made via a web interface accessible via any browser by the input of the user authentication. The access to the user space from the smartphone or tablet can be realized by special applications for managing the golf trolley 1. Such applications or web-interfaces can be used to configure the trolley 1 with user data. The server 80 manages preferably multiple users with their user spaces 81. Each user can access their own user space 81 by their user authentication (normally via the user credentials). A golf trolley 1 can be linked to a certain user by inputting the user credentials/authentication of the user in the golf trolley 1. This linkage could be fixed, e.g. if the golf trolley 1 belongs to the user or this linkage could be temporary just for one game, if the golf trolley 1 is rented (e.g. from the golf court) or borrowed (from a friend). If the golf trolley 1 is linked temporarily to the user, it is also possible to select the golf club configuration data for the temporarily use of the golf trolley 1.

In the following, different actions related to different action triggers are described in more detail.

A first action described refers to the functionality to drive automatically versus the next Tee. Golf trolleys 1 are not allowed on the green. The green consists of the area at the far end of a golf hole (opposite to the tee) where the grass is kept shortest and on which golfers are meant to use a putter. The green represents the general target area of a golf hole as it contains the actual hole or cup inside its perimeter in which the golf ball must be put to finalize the hole according to the game rules. Therefore, very often the golfer leaves the golf trolley on one side of the green and enters the green with the putter. However, when the golfer finishes the putting, he could walk directly in the direction of the new tee, if he would not need to return to the golf trolley 1 left behind. The current action allows to send the golf trolley 1 to the next tee so that the golfer can leave the green right in the shortest direction towards the next tee, i.e. the tee (starting point of a hole) of the next hole. This action is subsequently abbreviated as go-towards-the-next-tee. This action is basically a navigation action.

In step S1, the action trigger for triggering the go-towards-the-next-tee action is detected in the action trigger unit 32. The action trigger is the detection of the putter as detected by the object detector 33 in the image of the camera 21. The object detector 33 detects thus the presence of a golf club in the image of the camera, wherein the golf club is of the type of putter. This action trigger has the great advantage that the golf trolley would not leave without assuring that the golfer has actually taken the putter to finalize the current hole on the green. Otherwise, it could happen that the golfer traverses maybe the green with a sand club to access a bunker behind the green and would leave, if the action trigger would only be limited to the position of the golfer on the green.

In step S2, in response to detecting the action trigger for triggering the go-towards-the-next-tee action (in response to detecting the putter), the automatic movement unit 311 navigates the golf trolley to a new position between the current green (green of the current hole) and the tee of the next hole along a walking itinerary to the next hole. The walking itinerary refers to an itinerary which the majority of golfers would take when walking to the new whole without consideration of a golf trolley 1 left behind. This is normally the shortest, but still comfortable way to walk there. This walking itinerary can be obtained by observation or simply pre-defined in the map unit 52. In one embodiment, this new position could be already in the zone of the next hole, preferably in a waiting zone of the next hole close to the tee of the next hole. However, preferably, the new position is still in current hole or in the zone between the zone of the current hole and the zone of the new hole. Preferably, the new position is at the exit of the green on the walking itinerary or on the exit of the current hole on the walking itinerary (e.g. next to the driveway). This behaviour has the advantage that on the one hand side, the user could walk directly to the next hole when leaving the green (without to go back to the golf trolley 1) but can still find the golf trolley 1 well before reaching the next hole so that the putter can be placed back in the golf trolley 1. Also, the golf trolley 1 is not disturbing any group being in front of the golfer at the next hole. Also, some golf courts require to cross streets between holes which is not allowed for the golf trolley 1 alone. So, by moving the golf trolley 1 in the direction of the new hole, but still keep him waiting (on the walking itinerary) in the current whole or at least between the zones of the two holes, increases the comfort and handling of the golf trolley 1. The new position for the go-towards-the-next-tee could simply be determined by storing this position in the map information of the golf court of the map unit 52 for each hole. The new position could be also re-set by the user configuration. Instead of the exact position, it is also possible that the walk itinerary for each hole is stored in the map information and the golf trolley determines the best position on this walk itinerary. The golf trolley could determine the best position on this walk itinerary based on user configuration which defines if the user desires to have the golf trolley rather closer to the current hole or rather closer to the next hole. The user configuration could be stored in the user space 56, 81.

In a preferred embodiment, the golf trolley 1 could still track/detect the shot(s) of the golfer on the green for the game statistics and (only) once the golfer has finished the hole or the golfer has put the ball in the cup of the green, the golf trolley 1 moves to the new position as described above between the green and the tee of the next hole. The golf trolley 1 could move outside of the green to get a good view of the shot with the putter on the green. The golf trolley 1 /control unit 30 could store a video taken from the putting action(s) of the golfer on the green.

A second action could be to gather shot data of the golfer. This action is subsequently abbreviated as shot-data-tracker action.

In step S11, the action trigger for triggering the shot tracer action is detected in the action trigger unit 32. The action trigger is the detection of a sub-group of golf clubs. The sub-group of golf clubs includes preferably iron clubs, preferably further one or more of hybrid clubs, wood clubs and drivers. Iron clubs refer here to the class of golf clubs and do not necessarily mean that the golf club must be made of iron. Wood clubs refer here to the class of golf clubs and do not necessarily mean that the golf club must be made of wood. The sub-group could include wedges like sands and/or approach. It could however also exclude some of those wedges as it is difficult to position behind those shots, e.g. when the sand wedge club is detected, the shot is normally from a bunker. However, it is better to include them in the sub-group and then determine by other parameters of the golf trolley 1, if it is not possible for the golf trolley to position behind the ball when the golfer hits the ball. This can be determined for example based on the position of the ball to hit or of the golfer hitting the ball on the map information from the map unit 52. This can additionally or alternatively be detected by the object detector 33 detecting obstacles or no-go zones for the golf trolley 1.

In step S12, the type and/or number of the golf club is detected. If the user space 56, 81 contains golf club configuration data specifying the precise golf club detected (beyond the type and number), the precise golf club can even be detected. The step S12 could be considered part of the action trigger or of the further condition for detecting the action trigger, wherein for each type/number of the golf club a different action is performed.

In step S13, the position of the hitting location of the ball is detected. This is preferably realized by detecting the ball on the ground before being hit and/or by detecting the golfer hitting the ball. This can be detected in the images of the camera 21. The golf trolley 1 either follows the golfer in orientation and or position such that the golfer remains in the field of view of the camera 21. Thus, the golfer will lead the camera 21 to the hitting position of the ball. The location/position of the ball can be determined based on the relative position of the ball and/or the golfer hitting the ball with respect to the golf trolley 1 (e.g. based on the stereo camera) and based on the current location of the golf trolley 1 (determined based on the location unit 51). Preferably, the location of the ball is determined based on the camera 21, preferably based on an object (like the ball or the golfer when hitting the ball) detected via the object detector 33. The location of the golfer could also be determined based on a location of a remote control 70 carried by the golfer, when the golfer hits the ball. The timing of the golfer hitting the ball can be determined based on the camera 21 and/or the object detector 33 and/or based on the sound of the club hitting the ball detected via a microphone.

In a preferred embodiment, the golfer body hitting axis can be determined. The golfer body hitting axis is the desired hitting direction based on the body of the golfer. This desired hitting direction is normally defined by the straight line through the ball parallel to the straight line spanned between the two feet (e.g. between their wheels or toughs). This can be determined well when the golf trolley 1 is position behind the ball in the direction of the hitting angle as described in more detail for the shot-video action. The detection of the desired hitting direction allows to detect the deviation angle of the shot be comparing the desired hitting direction and the true hitting direction of the ball shot of the golfer. The true hitting direction could be determined by a ball trajectory detection in a video of the golf shot and/or based on a line through the hitting location of S13 and the landing location of step S14.

In step S14, the landing location of the ball hit by the golfer is determined. The landing location of the ball can be obtained simply by detecting the next hitting location of the golfer, i.e. the location where the golfer hits the ball again. This information is obtained when the golf trolley 1 reaches the landing position. The golf trolley 1 normally goes with the golfer to his landing position of the ball to hit the ball again. The golf trolley 1 could be controlled by the golfer to drive them e.g. by the remote control, could be pushed/pulled (with or without assistance of the motor), the golf trolley 1 could follow the golfer to the landing location or the golf trolley 1 could lead the golfer to the ball (see find-ball sub-action). When the golf trolley 1 arrived at the landing position of the ball, the golf trolley 1 can detect the ball via the object detector 33 and/or the golfer hitting the ball via the object detector 33. The current position of the golf trolley 1 on the golf course, when the golf trolley 1 detects the ball 1 or the golfer hitting the ball again (and maybe when sufficiently close) could be used as landing location of the ball (accepting the small error of the distance between the ball and the golf ball). However, it is also possible to determine the landing position with a higher precision. The position of the ball or the golfer hitting the ball can be determined based on the relative position of the ball / golfer with respect to the golf trolley 1 plus the current position of the golf trolley 1 or based on the location of the remote control worn by the golfer.

In step S15, shot data are prepared and stored in association with the type and/or number (preferably both) of the golf club. The shot data are prepared based on the hitting location of the shot and the landing location of the shot. The shot data can comprise for example one or more of the hitting locations, the landing location, the distance between hitting location and landing location, the deviation angle from the desired hitting direction determined. The shot data could comprise further external data like weather data like wind speed/direction, rain data, temperature, etc. The deviation angle from the golfer body hitting axis could be determined based on the detected golfer hitting axis and the true hitting direction determined based on the hitting location and the landing location (or based on a trajectory analysis of a video of the shot). These stored golf club specific shot data can be used for many improved functionalities of the golf trolley 1. One example is the next step.

In step S16, statistical data of the shots of the user are updated based on the shot data determined in step S15. The statistical data can calculate for each type and number of the golf club based on all the shots of the user for this golf club the statistical data of the shot data. Preferably, the statistical data comprise statistical values for different shot parameters. Statistical value are statistical parameters of a statistical distribution. This could be the average value for gaussian distribution or more generally a median. The statistical value comprises preferably also a value regarding the error, e.g. the standard deviation or the variance or something the like. Preferred shot parameters are certainly the distance, eventually the shot deviation. This statistical data of a user for specific types and numbers of clubs can be a huge help for recommending the correct club for the specific user, for improving the swing, for finding the ball or simply for a statistical analysis of the shots of the user. If the golf club configuration data are available, the statistical shot data can distinguish (not only between different types or numbers of golf clubs but also) between different specific golf clubs of the same type and number. For example, when the user/golfer uses tests a new set of golf clubs and compares the statistical shot data of his previous set of golf clubs with a number of specific golf clubs with the statistical user shot data of a new set of golf clubs with a number of new specific golf clubs, he can compare easily, if the new golf clubs improve his performance.

After step S15 or S16, the shot data of this shot could be compared with the statistical shot data or with selected prior shot data. A feedback information could be generated based on this comparison giving feedback on the shot compared to previous shots of the user (for this specific golf club or in general). The feedback could be, if the shot was better than the average or less good. For example, the feedback could be, well done, you have hit 10 meters longer than your average distance with this club.

In the shot-data-tracker action, the detection of the different types and numbers of golf clubs define each a different action trigger, which each result in a different kind of action (storing the shot data to the type and number of the club as detected in the action trigger).

The step S12 could optionally be completed by outputting club related information. Preferably, the club related information or club information comprises information about the potential landing zone of the ball. Preferably, the user specific statistic shot data for the detected club is output, preferably shown on the display. Preferably, the distance of the selected club from the current hitting position (or from the position of the golf trolley) could be shown on the display, eventually with an error range of the hitting distance. This would allow the user to see right away, if the golfer risks to hit in a risk zone like a bunker or water, if the distance with the error zone covers one of those risk zones. The distance zones could be given with different percentages, a first distance zone with a likelihood of 70%, a second and third distance zone before and behind the first distance zone with a second likelihood of e.g. 20% together (or 10 % each). This allows very quickly to see the risk with the selected golf club. The club related information could also be the recommendation of a better club. The club related information could also be output via voice or audio output. This output information is also described in the following action.

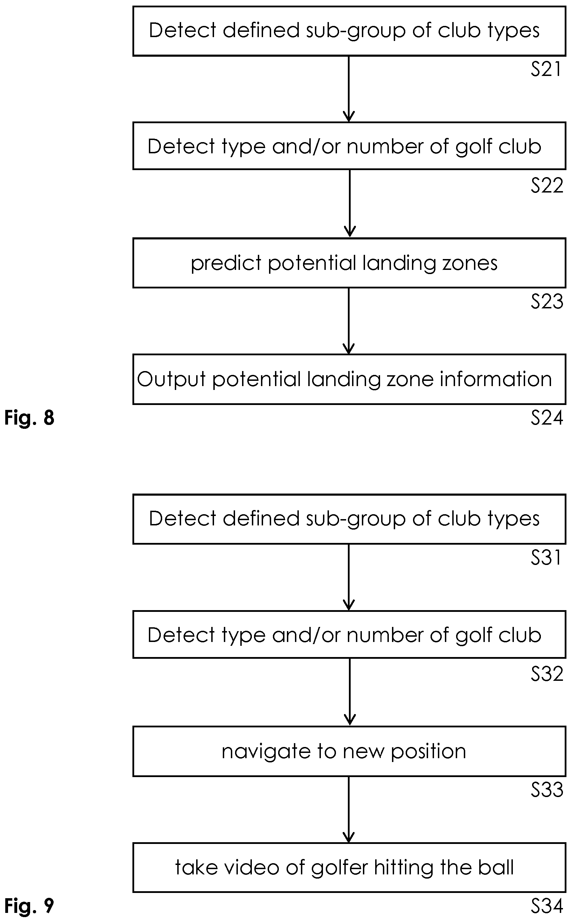

A further action to be triggered could be to predict the potential landing zones of the golfer hitting the ball based on the selected club. This action is subsequently abbreviated as a club-selection-information action. This action is schematically shown in Fig. 8.

In step S21, the action trigger for triggering the club-selection-information action is detected in the action trigger unit 32. The action trigger is the detection of the sub-group of golf clubs as already explained above for step S11 and the description will not be repeated here. The same action trigger could trigger a combined action of one or two or all of the shot-video action and the shot-data-tracker action and the club-selection-information action.

In step S22, the type and/or number of the golf club is detected. This step would correspond to step S12 as explained above and is not explained again.

In step S23, the potential landing zones of the ball hit by the selected golf club are estimated. The potential landing zone can be one zone in which the ball will most likely land. The potential landing zone could comprise two or more zones in which the ball lands with different probabilities (e.g. a zone of high probability and a zone of medium probability, eventually a third zone with small probability. Smal, medium and high are meant relative to each other and not as absolute relative values. The landing zones can be determined based on the standard hitting distance of the type and number of the golf club detected and based on a standard deviation of this distance. Similarly, the lateral limitation of the landing zones can be determined based on the standard angle error (standard deviation) of the golf club (maybe specific to this type and number of the golf club). These potential landing zone can be highly improved by using instead the personalized statistical shot data (e.g. for distance and eventually also the direction deviation) gathered in the shot-data-tracker-action. For example, when the user tends statistically to hit rather to the right with the driver, the potential landing zone can be adapted rather to the right. While maybe with the irons, the user tends rather slightly to hit to the left. So, depending on the user and the club type, the lateral limitation of the potential landing zones could be adapted accordingly.

In step S24, the information regarding the potential landing zone is output via the output means 54. This is preferably output via the display, preferably by showing the landing zones on the map of the hole. However, the information could also be output by a recommendation like "well-chosen" or "better to take the smaller (or larger) club", maybe including a small explanation.

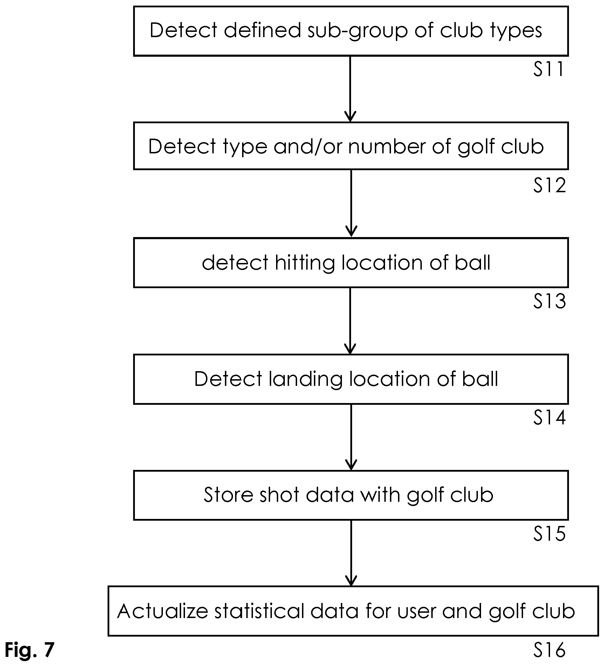

The club-selection-information action can be well combined with the actions in Fig. 7 or Fig. 9 or both as they have only to be inserted after step S12 or S32.

A further action to be triggered could be to record a video of the golfer hitting the ball and/or of the shot of the ball. This action is subsequently abbreviated as a shot-video action. This action is schematically shown in Fig. 9.

In step S31, the action trigger for triggering the shot-video action is detected in the action trigger unit 32. The action trigger is the detection of the sub-group of golf clubs as already explained above for step S11 and the description will not be repeated here. The same action trigger could trigger a combined action of the shot-video action and the shot-data-tracker action.

In step S32, the type and/or number of the golf club is preferably detected. This step would correspond to step S12 as explained above and is not explained again. This step is optional for the shot-video action.

Optionally, a further step could be to check the hitting distance of the detected type and number of the golf club and verify with the map information of the current hole and to output some number evaluation output. For example, when the hitting distance corresponds to the distance to the green, the evaluation output could be positive. For example, if within the hitting distance is a bunker, water, forest or any other risk zone, the evaluation output could give out those risk and/or recommendation to avoid those (e.g. a hitting direction to avoid those risks or another club which might have a lower hitting distance but avoiding the risk). The hitting distance used can be the standard hitting distance. However, in a preferred embodiment, it is the personal hitting distance as determined for example from the shot data tracker action.

In step S33, in response to detecting the action trigger for the shot tracer action (in response to detecting the golf club of the sub-group), the golf trolley 1 navigates to a new position behind the ball in the hitting direction of the ball such that the optical axis of the camera 21 is aligned with the most likely hitting direction of the golfer. This position could be pre-stored for the tee of each hole. For tees, where there is no space behind the tee, an alternative position can be pre-stored, e.g. in 45° to the hitting direction or perpendicular to the hitting direction. For the other hitting positions (than the tees), the position could be a fixed distance behind the hitting position of the ball (with the optical axis of the camera 21 aligned with the most likely hitting direction). The orientation of the golf trolley 21 could be slightly adapted based on the position of the golfer to predict the hitting direction of the ball. For example, such a fine tuning of the alignment could be achieved by aligning the two feet (or heels) of the golfer as the feet of the golfer must be positioned perpendicular to the hitting direction and consequently, the heels or toughs of the feet need to be parallel to the hitting direction and thus aligned one behind the other in the field of view of the camera 21. If the navigation unit 31 determines (based on the object detector 33 or based on the map information from the map unit 52) that the desired position is means an obstacle for the golf trolley 1, a new second best position is estimated (either farther away from the golfer's hitting position and/or at a different angle of the camera optical axis with respect to the hitting direction) as the new position for taking the video. The obstacle could be also a human detected at this position. The position behind the ball has the advantage that even if the ball moves very fast, the camera can follow the ball quite well as the movement direction is in the optical axis of the camera 21, while the vertical movement and the lateral movement (to the optical axis or the hitting direction) is rather slow.

In step S34, the control unit 30, preferably the action trigger unit 32 controls the camera 21 to take a video of the golf shot, when the golf trolley 1 is in the position of step S13, i.e. in the position to which the golf trolley navigated in step S13. The video recorded/taken comprises preferably the ball from the moment of hitting the ball until the ball landed on the golf court. Preferably, the video captures as well the golfer while hitting the ball, i.e. captures the swing of the golfer shortly before the golfer hits the ball. The start of the video could be triggered by the sound of the golf club hitting the ball minus a swing time of less than 10 seconds, preferably 5 seconds. This means the camera 21 continuously stores the captured video images in a temporary storage (which are discarded or overwritten after a certain time). When the hitting of the golf ball is triggered, e.g. by the sound, the related swing time before the hitting of the golf ball of the video in the temporary storage is used already for the recording of the video. The video ends preferably when the ball does not move anymore or disappears. The ball is preferably tracked in the video. This can be done by the object detector 33. However, preferably alternatively or in addition, this is realized by some tracking algorithms like a Kalman filter. When the ball moves close to the peripheral zone of the image, the golf trolley 1 could change the orientation of the golf trolley 1 and/or of the camera 21 to keep the ball always in the field of view of the camera 21.

This shot-video action can very well be combined with the shot-data-tracker action. The steps S11 and S21 would be followed by the step S13 detect hitting location) and S33 (navigate to the position behind ball). Then the video would be taken in step S34.

This video from behind can be used for many purposes as will be described subsequently, i.e. for many different sub-actions, i.e. variations of the main action shot-video action.

In one embodiment, the video recorded can be recorded in the user space of the user/golfer (shot-tracer sub-action of shot-video action). This allows the user to review his/her shots during or after the game. Preferably, the video is recorded in association with the type and/or number of the golf club detected in step S12. If the specific golf club was detected (e.g. based on golf club configuration data), the specific golf club is associated with the video (in addition or instead of type and number). Preferably, the video is recorded in association with the hitting location of the ball on the court. The user interface for the user space 56, 81 could allow to show the different hitting locations on a map and select the different videos by selecting the hitting location. Preferably, landing information about the shot could be stored as well with the video, e.g. from the shot-data-tracker action. The landing information is any information related to the landing location of the ball of this shot. This could be the distance of the landing position of the golf shot from the hitting location, the absolute landing position or other information related to the landing information. The landing information can be obtained simply by detecting the next hitting location of the golfer. This information is obtained, e.g. when the golf trolley 1 goes with the golfer to his landing position of the ball (e.g. in the follow mode) to hit the ball again (as explained above). Preferably, the feedback information could be stored associated to this video (comparing the shot data with previous shot data or statistical shot data). Preferably, the video is recorded with the game information like the whole in which the ball was hit and the number of the shot in this hole. The respective hole can be obtained simply by location information. The number of shots can be obtained by counting the number of shots of the golfer.

In another embodiment, the video of the shot contains the swing of the golfer, and the control unit could give out via the output means 54 analysis information about the swing of the golfer. This shot-video sub-action could be abbreviated as analyse-swing action. The video of the swing could be analysed based on an analysis of the pose and movement of the golfer and the golf club, e.g. by comparing it to reference pose and/or movement of the golfer and the golf club. However, the swing could additionally be analysed based on the determined itinerary, distance and/or direction of the ball hit. For example, if the ball goes to much on the right (for a right-handed golfer), the recommendation could be to change the grip to close the face of the golf club more. If the ball trajectory is too flat, the recommendation could be to hit the ball lower or not move the knee during the swing. This embodiment can be combined with the previous embodiment and the recommendations could be stored together with the video. The swing analysis or the recommendations or both can be stored associated with the video.

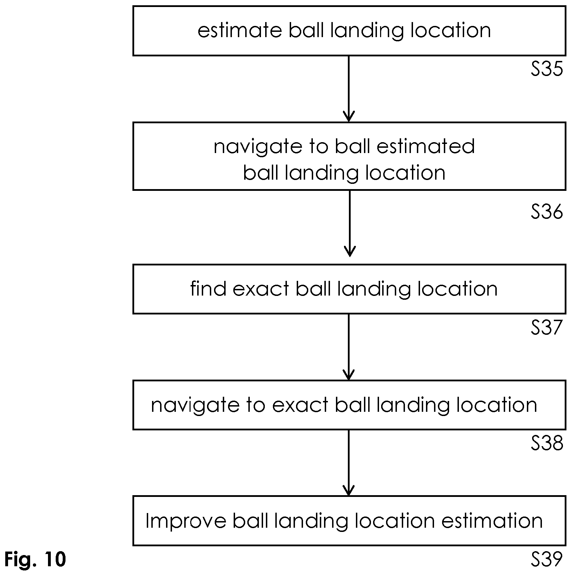

In one embodiment, the video could be used to predict the expected landing location of the ball based on the video of the shot and/or based on the information about the detected golf club and navigate to the ball (find-ball sub-action of the shot-video action). This sub-action is illustrated in Fig. 10.

In step S35, the potential ball landing location is estimated. This is done either based on the shot video and optionally based on the data of the type and number of the golf club, preferably based on both. The potential landing zone determined based on the detected type and number of the golf club was explained already above in S23. This can be used to determine a rough zone in which the ball should be, especially a rough distance. The direction of the ball hit (hitting direction) can on the other side be well estimated from the shot video. However, the information on the distance can be also omitted. However, more preferably, the estimated shot distance of the potential landing zone is determined based on the (preferably a user specific statistical) shot distance obtained from the detected type and number of the user and based on the trajectory information from the video, preferably based on trajectory information relating to the vertical ball movement. Trajectory information relating to the vertical ball movement are one or more of the maximum height of the ball (eventually normalized by the orientation or vertical inclination of the optical axis of the camera), the time when the maximum height has been achieved, the time of flight of the ball until it hits the ground (counted from hitting the ball), the speed of the golf club hitting the ball.

In step S36, the trolley 1 is controlled to navigate to the potential landing location.

In step S37, the trolley 1 is controlled to find the exact/true ball landing location. The exact/true ball landing position refers to the corrected position with respect to the previously estimated landing position/landing zone. Preferably, the trolley 1 is navigated such to find the ball as fast as possible. This is realized preferably by navigating as much as possible along the hitting direction detected in the shot video in step S35. Preferably, the complete distance from the hitting location to the expected landing location should be realized on this line. However, often this is obstructed by obstacles like bunkers, lakes, trees, rocks, etc. Therefore, the trolley 1, if there are obstacles on the direct line can move either around the obstacles each time or choose another itinerary which brings the trolley 1 at the beginning of the landing zone (or less preferably) at the end of the most likely landing zone where this zone cuts the hitting direction detected. Then, the trolley 1 navigates along this line to the other end of the most likely landing zone to find the ball. Especially, when the trolley 1 navigates from the beginning of the landing zone (being closer to the hitting location than the end of the zone) along the line of the hitting direction, the trolley 1 can match the current images of the camera 21 with the image of the shot video in which the ball disappeared. Like that the camera 21 should see the same perspective as when taking the shot video and could recognize the point where the ball disappeared in the image in the current image of the camera 21. However, alternatively or if this approach fails, a random approach could be chosen to start searching for the ball.

In step S38, the golf trolley 1 navigates to the exact landing location as determined in step S37. The golf trolley 1 preferably positions and orients itself in a predetermined way with respect to the ball, e.g. a fixed distance to the ball with the camera 21 indicating the ball.

In an improved embodiment, in step S35, the ball landing position is estimated based on a shot distance ML engine which receives as input the type and number of the golf club and information from the video. The information from the video could be the video itself. However, preferably information from the video is the trajectory information relating to the vertical ball movement detected from the video taken as described above. The output of the shot distance ML engine would be the shot distance, optionally with an error information. The training data would be the respective input information for many shots annotated with the exact location of the ball landing position. In such an embodiment, in step S39, the exact landing location of the ball determined in step S37 could be used to further train the ML engine. This allows a continuous training of the shot distance ML engine which could continuously improve the detection of the ball. It is also possible to not use the type and number of the golf club as input for the shot distance ML engine and use just the information from the video as input in the shot distance ML engine.

The action trigger S11, S21, S31 of the shot-data-tracker action, of the club-selection-information action and/or of the shot-video action are preferably the same so that they can be triggered all together by the same trigger action. However, it is also possible that the have different action triggers.

Even if the described actions are according to the invention triggered by a golf club detected in the object detector 33, the current disclosure shall include further the described actions with different action triggers than the golf club. These action triggers can still be triggered by objects detected in the object detector 33, e.g. a certain gesture command or a certain behaviour of the golfer. However, it is also possible that the action trigger is a simple user command like a button on the touch screen 54 or the remote control, a voice command or other user input, so basically a non-automatic trigger. The action trigger could also be based on other trigger information like the position of the golf trolley 1 or of the golfer. The automatic move unit 311 could thus also perform move actions in response to user commands.

For example, the go-towards-the-next-tee action could be triggered in step S1 by a user command from the user (gesture command detected in the object detector 33, a voice command, a button on the touch screen 54 or on the remote control 70 or via a remote application, e.g. on a mobile phone of the user). Alternatively, the go-towards-the-next-tee could be triggered also by the golfer putting the ball in the cup of the green. For example, the shot-data-tracker action could be triggered in step S11 by a user command from the user (gesture command detected in the object detector 33, a voice command, a button on the touch screen 54 or on the remote control 70 or via a remote application, e.g. on a mobile phone of the user). For example, the club-selection-information action could be triggered in step S21 by a user command from the user (gesture command detected in the object detector 33, a voice command, a button on the touch screen 54 or on the remote control 70 or via a remote application, e.g. on a mobile phone of the user). For example, the shot-video action could be triggered in step S31 by a user command from the user (gesture command detected in the object detector 33, a voice command, a button on the touch screen 54 or on the remote control 70 or via a remote application, e.g. on a mobile phone of the user).

In one or more of the following actions the shot-data-tracker action, the club-selection-information action and the find-ball sub-action, the detection of the golf club and of its type and/or number can be used as requested input instead of as trigger action to trigger the described actions.

Even though the camera 21 is preferred, the sensor unit 20 could alternatively and/or additionally comprise other sensors for detecting objects and/or for sensing the environment around the trolley 1, e.g. a Lidar, an ultrasound sensor, or others.

## Claims

1. Golf trolley comprising
wheels (40, 41, 42),
a drive unit configured to drive the wheels (40, 41, 42) to move the golf trolley,
a camera (21),
a control unit (30) configured to autonomously control the golf trolley to perform actions, wherein the control unit (30) comprises an object detector (33) and an action trigger unit (32),
wherein the action trigger unit (32) is configured to determine an action trigger, wherein control unit (30) is configured to control the golf trolley to perform an action in response to the determined action trigger;
**characterized in that**
the object detector (33) is configured to receive an image from the camera (21) and to detect in the image a golf club taken by the golfer, and
the action trigger unit (32) configured to determine based on the detected golf club the action trigger.

2. Golf trolley according to claim 1, wherein the object detector (33) is configured to detect the type of the golf club; wherein the action trigger unit (32) is configured to determine the action trigger based on the detected type of the golf club.

3. Golf trolley according to claim 2, wherein the object detector (33) is configured to detect the number of the golf club, wherein the action trigger unit (32) is configured to determine the action trigger based on the detected number and/or the action performed depends on the number detected.

4. Golf trolley according to claim 2 or 3, wherein the action trigger unit (32) determines a first action trigger based on a first type and/or a first number of golf club detected and a second action trigger based on a second type and/or second number of golf club detected, wherein the control unit (30) is configured to perform a first action, when the first action trigger is determined and to perform a second action different from the first action, when the second action trigger is determined.

5. Golf trolley according to one of claims 2 to 4, wherein, when the object detector (33) detects a putter taken by the golfer, the action trigger unit (32) detects a first action trigger, the control unit (30) controls the golf trolley in response to the determined first action trigger to navigate to a new position between a green of a current hole on which the golf trolley 1 is located and a tee of the next hole.

6. Golf trolley according to claim 5, wherein the new position of the golf trolley between the green of the current hole and the tee of the next hole is in the zone of the current hole or in a zone between the zone of the current hole and the zone of the next hole of the golf court.

7. Golf trolley according to one of claims 2 to 6, wherein, when the object detector (33) detects a golf club taken by the golfer from a specific sub-group of golf clubs, the action trigger unit (32) detects a related action trigger, the control unit (30) controls the golf trolley in response to the determined related action trigger to perform a related action.

8. Golf trolley according to claim 7, wherein the related action comprises the following steps performed by the control unit (30):
detect the type and number of the golf club from an image of the camera (21) in the object detector (33);
detect the hitting location of the ball;
detect landing location of the ball;
determine shot data based on the detected hitting location and
based on the detected landing location; and
store the shot data in association with the detected type and number of the golf club.

9. Golf trolley according to claim 7 or 8, wherein the related action comprises the following steps performed by the control unit (30):
detect the type and number of the golf club from an image of the camera (21) in the object detector (33);
detect the hitting location of the ball;
detect the potential landing zone based on the hitting location of the ball and based on a distance related to the type and number of the golf club detected;
determine potential landing zone information based on the potential landing zone and based on map information of the current hole; and
output the potential landing zone information.

10. Golf trolley according to claim 8 and 9, wherein the potential landing zone is detected based on a user specific statistical shot distance data for the detected type and number of the golf club, wherein the shot data in association with the detected type and number of the golf club are used to update the user specific statistical shot distance for the detected type and number of the golf club.

11. Golf trolley according to one of claims 7 to 10, wherein the related action comprises the following steps performed by the control unit (30):
navigate the golf trolley to a position behind the ball such that the optical axis of the camera (21) of the golf trolley directs in the hitting direction of the golfer; and
take a video of the golfer hitting the ball.

12. Golf trolley according to claim 11, wherein the video taken is recorded in a user space, wherein the user space of the golf trolley is connectable to a user space on a server to send the video taken from the user space of the golf trolley to the user space of the server, wherein the user space of the server is accessible for the golfer to review the video taken.

13. Golf trolley according to claim 11 or 12, wherein the video taken is used to analyze the swing of the golfer.

14. Golf trolley according to claim 11 or 12 or 13, wherein the type and number of the golf club is detected from an image of the camera (21) in the object detector (33); wherein the ball landing location is estimated based on a hitting direction detected from the video taken and based on a shot distance detected based on the type and number of the golf club, wherein the golf trolley is configured to navigate to the estimated landing location and to search for the exact ball landing location.

15. Golf trolley according to one of claims 2 to 14, wherein golf trolley is configured to receive golf club configuration data specifying for the detected type and optionally also the number of the golf club information relating to a specific golf club, wherein the golf club configuration data is used to improve the detection of the type and/or number of the golf club and/or is used to generate statistical shot data based on the specific golf club used.
